# EUROPEAN PATENT SPECIFICATION

(11) **EP 0 510 730 B1**
(45) Date of publication and mention of the grant of the patent: **06.03.1996**
(21) Application number: 92111462.5
(22) Date of filing: 16.09.1988
(51) Int. Cl.: G04C 10/00, G04C 3/14

(54) **Analog electronic timepiece**
Analoger elektronischer Zeitgeber
Pièce d'horlogerie analogique, électronique

(30) Priority: 21.09.1987 JP 236463/87; 21.09.1987 JP 236464/87; 21.09.1987 JP 236465/87
(43) Date of publication of application: 28.10.1992
(62) Divisional of application: 88308591.2
(73) Proprietor: SEIKO EPSON CORPORATION, Shinjuku-ku Tokyo (JP)
(72) Inventor: Hayakawa, Motomu, c/o Seiko Epson Corporation, Tokyo (JP); Yoshino, Mashahito, c/o Seiko Epson Corporation, Tokyo (JP)
(74) Representative: Sturt, Clifford Mark

(56) References cited:
- CH-A- 616 044
- PATENT ABSTRACTS OF JAPAN vol. 11, no. 109 (P-564) 7 April 1987 ; & JP-A-61 259 192

## Description

This invention relates to analog electronic timepieces.

A typical electronic timepiece includes a solar battery as a part of a dial plate, arranged so that electric power produced by illumination of the solar battery charges a secondary battery. It is known from Japanese Laid Open Patent Application No. 154665/87, Japanese Laid Open Patent Application No. 11846/74 and Japanese Utility Model Publication No. 4240/81 that an electronic timepiece may employ a charging terminal at an external portion thereof, arranged so that electric power charges a secondary battery depending on the contact with an external power source. Further, it is known from Japanese Laid Open Patent Application No. 29783/86, that an electronic timepiece may employ an electro-magnetic coupling coil disposed inside it and arranged so that a magnetic field is supplied to the electro-magnetic coupling coil from the exterior to charge a secondary battery. Furthermore, it is known from Japanese Patent Publication No. 15035/85 that an electronic timepiece may employ a motor coil for driving it and arranged so that, in a similar manner to Japanese Laid Open Patent Application No. 29783/86, a magnetic field is supplied to the motor coil, when dis-connected from a timepiece driving circuit, during charging of a secondary battery.

However, the above previous proposals have the following dis-advantages.

First, when a solar battery system or charging terminal or system is used, the design of the external appearance of wrist watches is limited, because wrist watches are small in size. Therefore, it is difficult to apply the solar battery or the charging terminal to analog electronic wrist watches without damaging ornamental appearance.

Next, the electro-magnetic coupling system described in Japanese Laid Open Patent Application No. 29783/86 requires an electro-magnetic coupling coil and a rectifying diode or the like, in addition to the motor coil for driving the wrist watch resulting in an increase in the physical size of the wrist watch as well as increase in cost.

Further, in the system using a motor coil for driving and charging a timepiece, the motor coil requires a switching mechanism to alternately connect the coil to the timepiece driving circuit or the charging circuit depending upon the movement of the time indicating hands or the charging operation, and a rectifying diode is also required as part of the charging circuit. As a result, the flexibility of the design of a wrist watch of this type is limited, cost is increased and some special regard must be paid to mechanical reliability of the switching mechanism. Since during charging the movement of the time indicating hands is stopped, it is necessary to set the watch after charging which is inconvenient. Accordingly, it is desirable to provide a charging type electronic analog timepiece which overcomes the short-comings of the prior art described above.

The present invention seeks to provide a small-sized and low cost charging type analog electronic time- piece where no electronic circuitry or charging mechanism except for a small logic circuit is required. The present invention also seeks to provide an analog electronic timepiece wherein charging of a re-chargeable or secondary battery can be carried out without stopping movement of time indicating hands.

According to the present invention, there is provided an analog electronic timepiece comprising at least a step motor having a coil, switching elements for driving the step motor, a PN-junction electronically parallel to said switching elements, a secondary battery which can be charged and which has a positive terminal and a negative terminal, voltage detecting means for detecting the voltage of the secondary battery and charge control means for controlling the charging of the secondary battery, the charge control means being connected to the voltage detecting means, and the switching elements comprising a first pair of switching elements connected from respective terminals of the coil to the positive terminal of the battery and a second pair of switching elements connected from respective terminals of the coil to the negative terminal of the battery, wherein when it is detected by said voltage detecting means that the voltage of said secondary battery has reached a pre-determined value the said first pair of switching elements or the said second pair of switching elements are turned to the ON state by said charge control circuit, except during the time of generating pulses to drive said step motor.

Preferably, the step motor has a coil to which the switching elements are connected and an AC voltage induced in said coil by an exterior AC magnetic field to charge the secondary battery is rectified through said PN-junction.

Beneficially, the arrangement has two switching elements connected from respective terminals of the coil to the positive terminal of the battery and two switching elements connected from respective terminals of the coil to the negative terminal of the battery, wherein respective terminals of the coil are short-circuited after the termination of each output of the driving pulses of the motor and thereafter at least three of the respective switching elements are turned to the OFF state.

The invention is illustrated, merely by way of example, in the accompanying drawings, in which:
Figure 1 is a circuit diagram of one embodiment of an analog electronic timepiece according to the present invention;
Figure 2 (a) is a sectional view of a P-channel MOSFET and parasitic diode;
Figure 2 (b) is an equivalent circuit diagram of the MOSFET of Figure 2 (a);
Figure 3 is an explanatory diagram showing the direction of current flow during charging of a secondary battery of the analog electronic timepiece of Figure 1 wherein full wave rectification takes place;
Figure 4 is a view similar to Figure 3 where half wave rectification takes place;
Figure 5 is a timing chart illustrating the timing for charging a secondary battery and timing for driving a step motor of the electronic timepiece of Figure 1;
Figure 6 is a timing chart showing the timing of signals of a charging control circuit of the analog electronic timepiece of Figure 1;
Figure 7 is a graph showing reverse induced current which flows in a motor coil of a step motor;
Figure 8 is a view illustrating rotation of a rotor of a step motor;
Figure 9 illustrates the direction of current flow during operation of a limiting circuit of the analog electronic timepiece of Figure 1 and;
Figures 10 (a) and 10 (b) are circuit diagrams of a sampling voltage detecting circuit of an analog electronic timepiece according to the present invention.

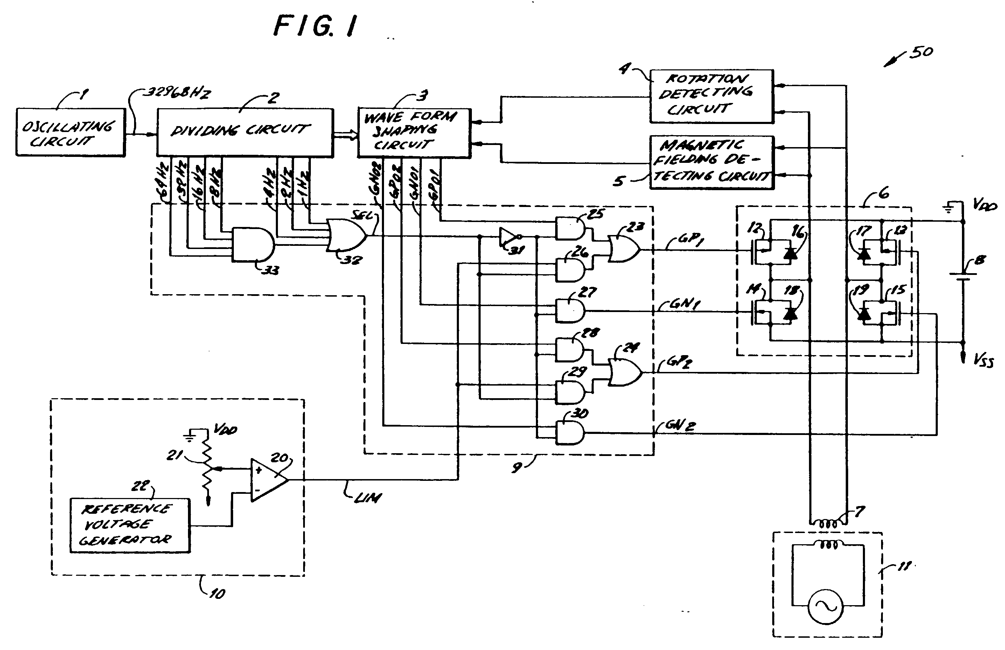

Referring first to Figure 1, there is shown one embodiment of an analog electronic timepiece according to the present invention. An oscillator circuit 1 generates a reference signal of 32768 Hz and has a small-size quartz crystal oscillator serving as a vibrator or time standard. The reference signal is frequency divided by a frequency divider circuit 2 to generate signals having frequencies of 1 Hz, 2 Hz, 4 Hz, 8 Hz, 16 Hz, 32 Hz and 64 Hz required for driving the analog electronic timepiece. A motor driving waveform shaping circuit 3 is provided to generate a plurality of pulse signals required for driving a step motor of the electronic timepiece. A rotation detection circuit 4 is provided to detect whether a rotor of the step motor is rotated or not by a motor driving pulse P1. when the rotor is in a non-rotating condition, this is detected by the non-rotation detection circuit 4 which outputs a compensation motor pulse P2 to the waveform shaping circuit 3. A magnetic field detection circuit 5 is provided to increase the reliability in moving time indicating hands (not shown) by the step motor, and further to cancel the motor driving pulse P1 and output a compensation motor pulse P2 when an external magnetic field is applied to the analog electronic timepiece. Circuits 3, 4 and 5 are relatively low power consumption electronic driving circuits and are known from Japanese Laid Open Patent Application No. 75520/79, Japanese Laid Open Patent Application No. 77162/79 and Japanese Laid Open Patent Application No. 87977/80.

A motor driving circuit 6 is composed of P-channel MOSFETs 12, 13 and N-channel MOSFETs 14, 15 which are used for driving the step motor. Parasitic diodes 16 to 19 of the respective MOSFETs 12 to 15 serve as rectifying elements.

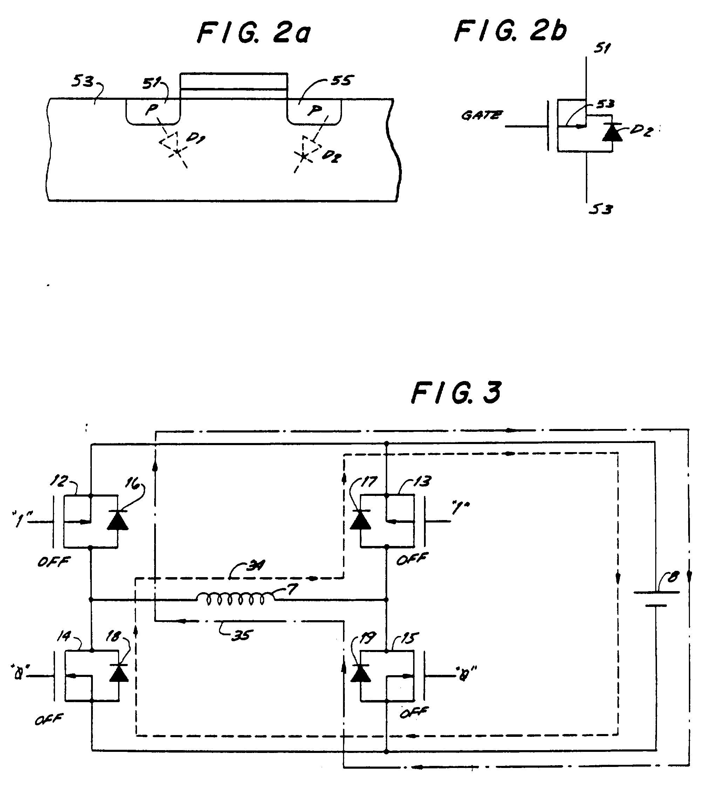

Figure 2 (a) is a sectional view of a P-channel MOSFET and Figure 2 (b) shows an equivalent circuit thereof. A PN-junction D1 is formed between a source and substrate and a PN-junction D2 is formed between a drain and substrate. Thus, each MOSFET has a parasitic diode in parallel therewith. Herein, when the MOSFET is utilised for driving the step motor, since the source and substrate are equally potential, the PN-junction D1 is invalid and the PN-junction D2 serves as a diode. In this case, the PN-junction D2 is referred to as a "parasitic diode", the drain serving as an anode of the diode and the substrate and the source serving as a cathode. The parasitic diode of an N-channel MOSFET is arranged in reverse to a P-channel MOSFET, that is, the substrate and the source serve as the anode and the drain serves as the cathode. In the present invention, the parasitic diode is also utilised as a rectifying element, so that no external rectifying element is required.

Referring back to Figure 1, the step motor has a motor coil 7. The step motor is driven by controlling ON/OFF states of the MOSFETs 12 to 15 and thus the time indicating hands are moved. During charging of a rechargeable or secondary battery 8, a AC magnetic field generated from an external charging device 11 is inter-linked with the motor coil 7 and, as a result of electro-magnetic induction, and AC voltage is induced in the motor coil 7 to charge the secondary battery 8, the parasitic diodes 16 to 19 serving as a rectifying circuit. The analog electronic timepiece is driven by the energy stored in the secondary battery 8.

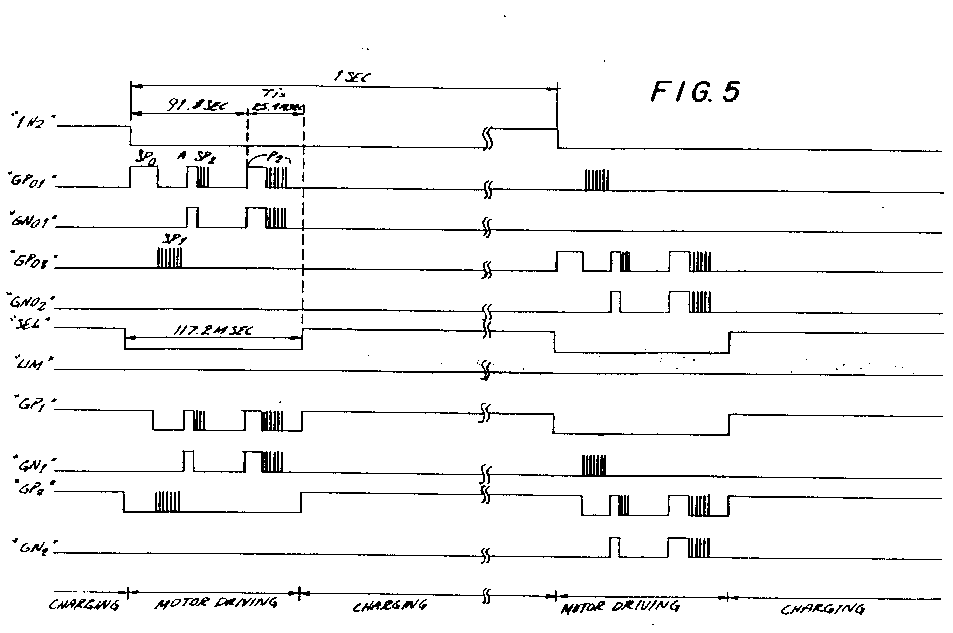

Figure 3 is an explanatory diagram showing the direction of current flow during charging of the secondary battery. In Figure 3, upon generation of the AC voltage in the motor coil 7, when the potential at the right side of the motor coil is higher, current flows in the direction of arrow 34, and when the potential at the left side of the motor coil is higher, current flows in the direction of arrow 35. Irrespective of which potential is higher, current flows to the secondary battery 8 in a charging direction, so that full wave rectification takes place. In order to establish full wave rectification, it is necessary to control the MOSFETs 12 to 15 so that all are turned to the OFF state. If one of the MOSFETs is in the ON state half wave rectification takes place as illustrated in Figure 4. In Figure 4, only the MOSFET 13 is controlled so as to be turned to the ON state and thus the terminals of its parasitic diode are short circuited, so that no diode bridge is formed. Therefore, when the right side potential of the motor coil 7 is higher, current flows in the direction of arrow 36 to charge the secondary battery 8. On the other hand, when the left side potential of the motor coil 7 is higher, current flows in the direction of arrow 37, that is, current flows from the parasitic diode 16, through the MOSFET 13 and the motor coil 7, resulting in a closed loop. Therefore, the secondary battery 8 is not charged and half wave rectification takes place. As a result, charging efficiency is decreased by half.

When both MOSFETs 12, 13 are in the ON state, or both MOSFETs 14, 15 are in the ON state, the secondary battery 8 is not charged at all. Therefore, in order to provide a rectifying circuit having the best efficiency for charging the secondary battery 8, it is necessary to turn all the MOSFETs 12 to 15 to the OFF state. However, when the MOSFETs 12 to 15 are in the OFF state, it is impossible to drive the step motor. On the other hand, in order to charge the secondary battery without affecting driving of the step motor, the timing for driving of the step motor and the timing for charging the secondary battery are controlled as shown in the timing chart of Figure 5. Namely, since the period for moving the time indicating hands is 1 Hz, all timing signals are generated in synchronism with the 1 Hz signal generated from the divider circuit 2. The period of 117.2 milli-seconds from the trailing edge of the 1 Hz signal becomes the period for driving the step motor, and the period of 882.8 milli-seconds from the termination of the period for driving the step motor until the next trailing edge of the 1 Hz signal becomes the timing for charging the secondary battery. In such a way, the timing for driving the step motor and the timing for charging the secondary battery are alternately repeated. Therefore, the period for charging the battery is 882.8 milli-seconds per second, so that charging efficiency is decreased by approximately 10%. However, since the respective timings are controlled as mentioned above, it is possible to charge the secondary battery without affecting movement of the time indicating hands and the correct time is kept irrespective of whether the secondary battery is being charged or not.

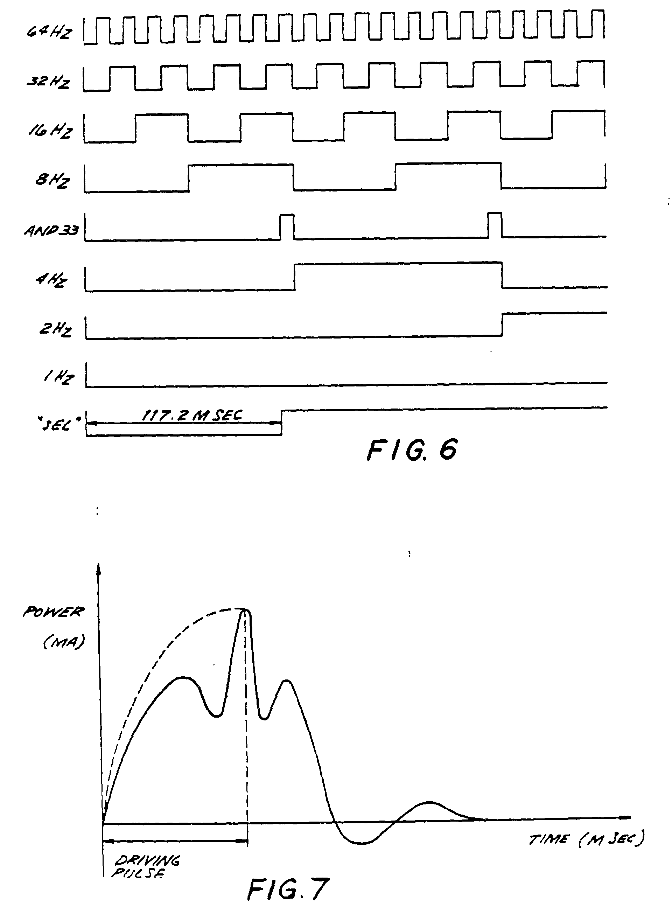

The operation of the analog electronic timepiece shown in Figure 1 will now be explained. The timing for driving the step motor is switched to the timing for charging the secondary battery 8 by a charging control circuit 9 and a signal SEL in the charging control circuit 9 becomes level 0 during the period of 117.2 milli-seconds from the trailing edge of the 1 Hz signal. Figure 6 shows a timing chart illustrating generation of the signal SEL from an AND gate 33 and an OR gate 32. The 64 Hz, 32 Hz, 16 Hz and 8 Hz signals generated from the divider circuit 2 serve as input signals to the AND gate 33 and the output signal of the AND gate 33 and the 4 Hz, 2 Hz and 1 Hz signals from the divider circuit 2 serve as input signals of the OR gate 32. The signal generated from the OR gate 32 is the signal SEL. An AND gate 25 receives the signal SEL inverted by the inverter 31 and a signal GP01 from the waveform shaping circuit 3 and an OR gate 23 outputs a gate signal GP1 to the MOSFET 12. A signal GN01 from the waveform shaping circuit 3 is fed to one input of an AND gate 27 which outputs a gate signal GN1 to the MOSFET 14. Similarly, a signal GP02 from the waveform shaping circuit 3 is provided as one input of an AND gate 28 and an OR gate 24 produces a gate signal GP2 to the MOSFET 13. A signal GN02 from the waveform shaping circuit 3 is fed to an AND gate 30 whose output is a gate signal GN2 which is fed to the MOSFET 15. The signals GP01, GN01, GP02, GN02 from the waveform shaping circuit 3 are a series of motor driving pulses formed from pulses SP0, SP1, P1, SP2 and P2, where SP0 and SP1 indicate magnetic field detecting pulses from the magnetic field detection circuit 5, P1 is the motor driving pulse referred to earlier, SP2 is a rotation detecting pulse and P2 is the compensation motor pulse referred to earlier. The detailed functions of the various pulses are indicated in Japanese Laid Open Patent Application No. 260883/85. Therefore, the step motor is driven for the period when the signal SEL is at level 0.

Next, the charging timing when the signal SEL is at level 1 will be explained. During charging, a signal LIM which is output from a voltage detecting circuit 10 is at level 1, the signal SEL is at level 1, and an AND gate 26 receives the signal LIM so that the OR gate 23 outputs the signal GP1 of level 1. Similarly, the signal LIM is fed to an AND gate 29 and the signal GP2 from the OR gate 24 is level 1. When the signal SEL is at level 1, the signal GN1 generated from the AND gate 27 is at level 0 and as a result the signal GN1 is level 0. Similarly, the signal GN2 is level 0. Therefore, the MOSFETs 12 to 15 are controlled so as to be in the OFF state irrespective of the signals generated from the waveform shaping circuit 3. When the MOSFETs 12 to 15 are in the OFF state, it is possible to charge the secondary battery 8.

In Figure 5, Ti, which indicates the period from the generation of the compensation motor pulse P2 to the leading timing for charging the secondary battery, is 25.4 milli-seconds and this time is the time required for driving the step motor stably for the reason given below. In the typical step motor driving system described in Japanese Patent Publication No. 40759/87, after the output of the motor pulse, two P-channel MOSFETs or two N-channel MOSFETs are controlled so as to be in the ON state, so that reverse induced current is supplied to the motor coil to brake the rotor, thereby making it possible to drive the step motor stably. Figure 7 shows the current supplied to the motor coil of a step motor. When the reverse induced current does not flow in the motor coil, the current waveform is shown by the dotted line. However, in practice, the current waveform is as shown by the solid line. When the rotor is stopped, the reverse induced current does not flow. In Figure 7, current value of 0 means that rotation of the rotor is stopped. However, since all of the MOSFETs 12 to 15 are in the OFF state during charging, if charging is carried out immediately after the output of the motor driving pulse P1, it is difficult to brake the rotor by supplying the reverse induced current, so that it is impossible to drive the step motor stably, and although the general angle for a two pole rotor is 180^{o}, the step motor is not stopped at the normal magnetic stable point, or may be rotated by two steps, or other mis-operation may occur.

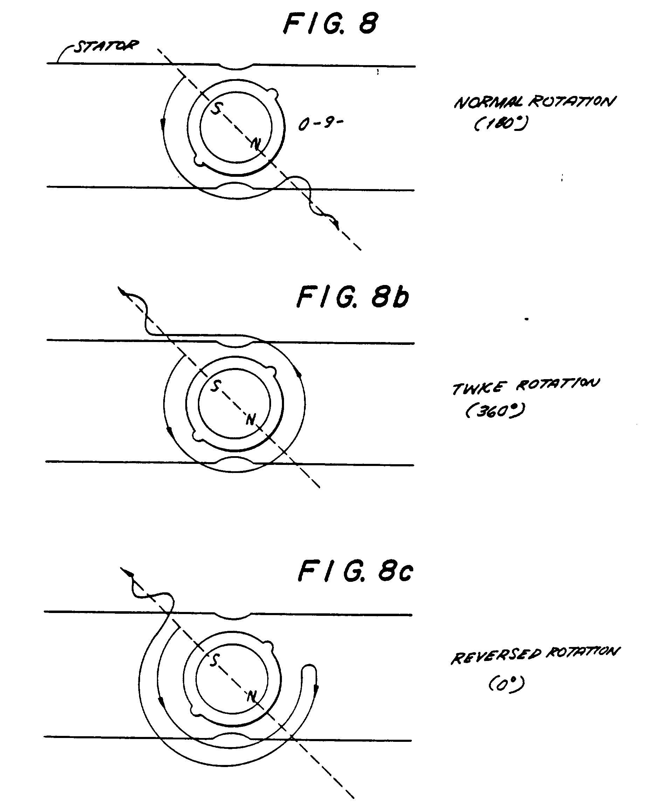

Figure 8 shows the normal rotation (180^{o}), reverse rotation and rotation by two steps of the step motor. To eliminate these problems, in the embodiment of the present invention shown in Figure 1, upon the output of the motor pulse P1, the MOSFETs 12, 13 are turned to the ON state so that the coil 7 is short circuited and, when the rotor of the step motor is stopped, all the MOSFETs 12 to 15 are turned to the OFF state for charging the secondary battery. In such a construction, it is possible to charge the secondary battery without affecting driving of the step motor.

In this embodiment, Ti is predetermined to be 25.4 milli-seconds which is sufficient for the rotor of the step motor to come to rest. However, Ti may be made longer or shorter depending upon the inertial moment of the rotor of the step motor. In general, the smaller the diameter of the rotor, the shorter the period from the generation of the motor driving pulse to the time for stopping completely the rotation of the rotor. When the minimum diameter of the rotor is 1 mm, the rotor is stopped in 10 milli-seconds. In manufacture, it is currently impossible to provide a rotor of less than 1 mm diameter in view of the characteristics of the motor. In this case, there is no problem if Ti is more than 10 milli-seconds. With the type of step motor generally used for wrist watches (although there is difference in variation with rotor inertia and driving pulse width), if Ti is approximately 20 milli-seconds, it is possible to stop the rotor completely and to switch to charging timing of the secondary battery.

Further, in the illustrated embodiment of the present invention, with Ti = 25.4 milli-seconds, the signal SEL is at level 0 for a period of 117.2 milli-seconds. Namely, a series of motor driving pulses are generated from the trailing edge of the 1 Hz signal and the compensation motor pulse P2 is generated 91.8 milli-seconds after the trailing edge of the 1 Hz signal. Furthermore, the signal SEL becomes level 0 in synchronism with the 1 Hz signal and therefore Ti = 117.2 - 91.8 = 25.4 milli-seconds. By changing the logic of the AND gate 33 and the OR gate 32, the period for which the signal SEL is level 0 may be changed and, as a result, it is easier to provide a timing suitable for any step motor. In the illustrated embodiment, the value of Ti is determined by using the generated time of the compensation motor pulse P2. Since during charging, the magnetic field is inevitably detected by the magnetic field detecting pulse SP0 or SP1, a compensation motor pulse P2 is always generated. In an analog electronic timepiece in which no magnetic field detection circuit is provided, the motor driving pulse P1 is used instead to determine the value of Ti. Furthermore, there are several step motor driving methods wherein step motors are driven by a combination of pulses. However, in all cases, Ti may be determined by using a motor driving pulse so as to have a value whereby rotation of the motor is completed before charging of the secondary battery begins.

To drive a step motor stably, the frequency of the AC magnetic field is 1 kHz. When the frequency is too low, the rotor is attracted by the AC magnetic field, thereby setting up sympathetic vibrations of the rotor or mis-operation of the time indicating hands. In a practical embodiment of the present invention where the diameter of the rotor of the step motor is 1.2 mm, it is found from experiment that the rotor is not operated by the AC magnetic field if it has a frequency of more than 600 Hz, and as a result, the step motor is not adversely affected. When the secondary battery 8 is charged to excess, i.e. the upper limit of its storage capacity is exceeded, deterioration or damage to the characteristics of the secondary battery 8 may occur. In order to eliminate this problem, it is necessary to provide a circuit for preventing the secondary battery from being over-charged. For example, in the analog electronic timepiece shown in Figure 1, it is necessary always to detect the voltage of the secondary battery 8 so as not to exceed the upper limit of the voltage of the storage battery, and to this end, the voltage detecting circuit 10 is provided to detect the voltage of the secondary battery 8. The voltage detecting circuit 10 has a voltage decreasing resistor 21 which is provided to decrease the voltage (VDD - VSS) of the secondary battery to within a region where a comparator 20 can operate. A reference voltage generating circuit 20 produces a reference voltage. It is thus possible to detect by means of the comparator 20 whether or not the voltage of the secondary battery exceeds a predetermined voltage accurately. When the voltage of the secondary battery is higher than the predetermined voltage, the signal LIM generated from the comparator 20 is switched to level 0 so that charging of the secondary battery does not take place. When the signal LIM is at level 0, if the signal SEL is at level 1 which indicates charging time, as previously described, the signals GP1 and GP2 are level 1, and the signals GN1 and GN2 are level 0. Thus when the signal LIM is at level 0, the MOSFETs 12, 13 are in the ON state and the MOSFETs 14, 15 are in the OFF state.

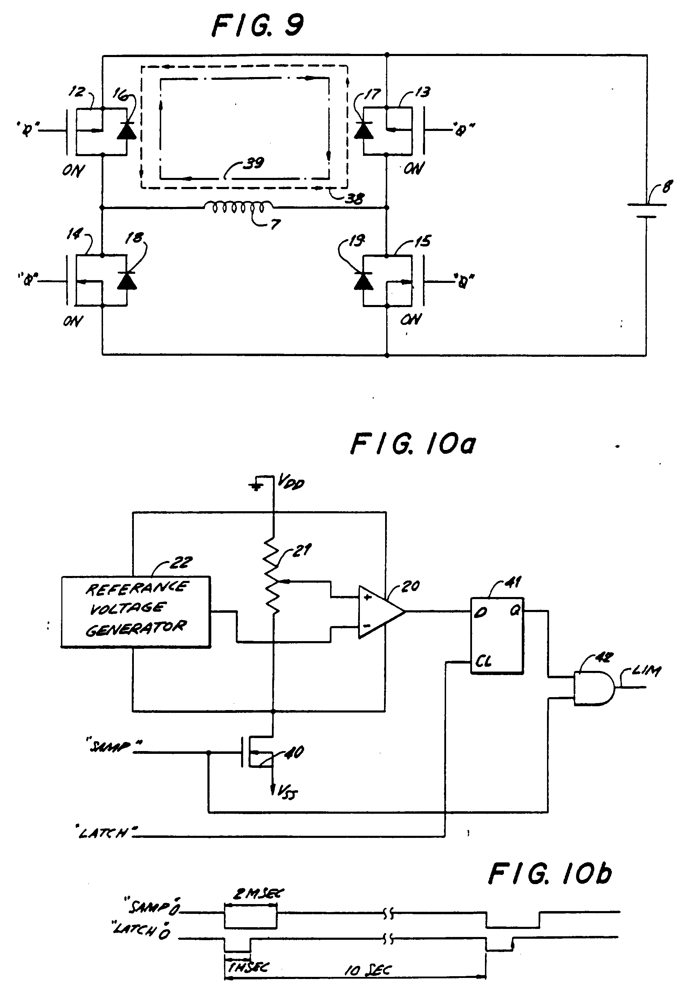

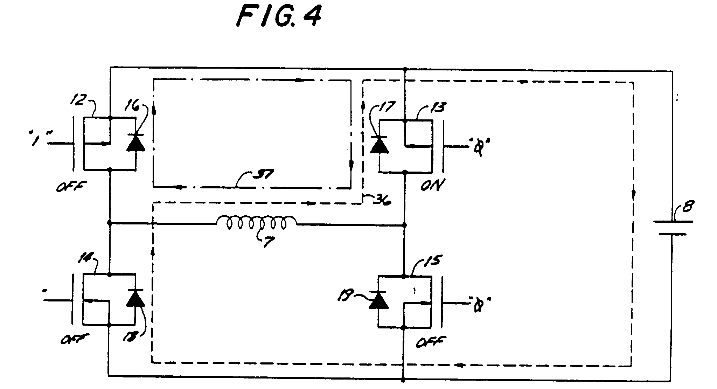

Reference is made to Figure 9 which shows the direction of current flow in the motor driving circuit 6 at the time when the voltage detecting circuit 10 detects that the voltage of the secondary battery exceeds the reference voltage. In Figure 9, when the potential at the right side of the motor coil 7 is higher, current flows in the direction of arrow 38. When the potential at the left side of the motor coil 7 is higher, current flows in the direction of arrow 39. In the illustrated embodiment, the MOSFETs 12, 13 are in the ON state when the voltage of the secondary battery exceeds the reference voltage and so current does not flow into the secondary battery 8 which is thus protected against excessive voltage. The same effect can be achieved if the MOSFETs 14, 15 are in the ON state. The voltage of the secondary battery 8 is always detected by the voltage detecting circuit 10. However, if the secondary battery has a relatively large internal resistance, a sample voltage may be detected at random. In other words, if the secondary battery has a relatively large internal resistance, its voltage is increased by an amount corresponding to its internal resistance during charging, so that that the chance of mis-detection may be increased. Therefore, in this case, it is necessary to provide a voltage detecting circuit such as shown in Figure 10. A sampling signal Samp has an active period of 2 milli-seconds in every ten seconds, and during the active period, it is at level 0. The period when the signal Samp is at level 0 is hereinafter referred to as a sampling timing. Upon turning a transistor 40 to the ON state, power is supplied to the comparator 20, the resistor 21 and the reference voltage generating circuit 22, thereby making it possible to detect the voltage (VDD - VSS) of the secondary battery. During the sampling timing, the signal LIM is switched to level 0 by an AND gate 42 thereby making it possible to prevent charging current from flowing into the secondary battery and prevent any mis-detection of the voltage. A latch 41 is provided to latch the output of the comparator 20 during the sampling timing and keep the latched condition until the next sampling timing. A latch signal Latch is generated in synchronism with the signal Samp as a clock signal of the latch 41 and is at level 0 for 1 milli-second. The signal generated from the comparator 20 is input to the latch 41 at the leading edge of the signal Latch. The voltage detecting circuit of Figure 10 is effective in decreasing power consumption, in addition to preventing mis-detection of the voltage of the secondary battery. Namely, since power is not supplied to the comparator 20, the resistor 21 and the reference voltage generating circuit 22 except during the sampling timing, current consumption is decreased. Therefore, even when a secondary battery has a comparatively low internal resistance and the voltage detecting circuit has the construction shown in Figure 10, it is possible to decrease power consumption. It will be appreciated that the period of the sampling timing and sampling width can be varied in accordance with the variation of construction of the secondary battery etc.

In the above embodiments, the parasitic diode of the motor driver FET is described as a rectifying element.

The analog electronic timepiece described above has the advantage that over-charging of the secondary battery can be prevented without providing any external electronic circuitry and charging mechanism. Therefore, the visual appearance of the electronic timepiece is not changed, so that the present invention may be incorporated in a thin dress type watch and further, it is possible to provide a small-sized and low cost analog electronic timepiece. In electronic timepieces known to date the movement of the time indicating hands must be stopped during charging of the secondary battery. However, it is possible to charge the secondary battery of an analog electronic timepiece according to the present invention whilst still moving the time indicating hands, resulting in good time keeping so that re-setting of the time indicating hands after charging the secondary battery is not necessary. The coil for charging the secondary battery also serves as the coil for driving the step motor, parasitic diodes serving as a rectifying circuit and thus no voltage limiting element is required. In particular, as described in the above embodiment of the present invention, MOSFETS for driving the step motor are used as short circuit means for the coil of the step motor to ensure that the rotor of the step motor has stopped rotating before charging of the secondary battery is initiated.

## Claims

1. An analog electronic timepiece comprising at least a step motor having a coil (7), switching elements (12 to 15) for driving the step motor, a PN-junction (16 to 19) electronically parallel to said switching elements, a secondary battery (8) which can be charged and which has a positive terminal and a negative terminal, voltage detecting means (10) for detecting the voltage of the secondary battery and charge control means (9) for controlling the charging of the secondary battery, the charge control means being connected to the voltage detecting means, and the switching elements comprising a first pair of switching elements (12, 13) connected from respective terminals of the coil (7) to the positive terminal of the battery (8) and a second pair of switching elements (14, 15) connected from respective terminals of the coil to the negative terminal of the battery (8), wherein said charge control circuit is capable of is detecting by said voltage detecting means that the voltage of said secondary battery has reached a pre-determined value and to turn to the ON state subsequently the said first pair of switching elements or the said second pair of switching elements, except during the time of generating pulses to drive said step motor.

2. An analog electronic timepiece as claimed in claim 1, wherein the coil (7) is arranged to have an AC voltage induced therein by an exterior AC magnetic field to charge the secondary battery as rectified through the said PN-junction.

3. An analog electronic timepiece as claimed in claim 2, wherein respective terminals of the coil are short-circuited after the termination of each output of driving pulses of the motor and thereafter at least three of the respective switching elements are turned to the OFF state.

## Patentansprüche

1. Analoge elektronische Uhr, umfassend wenigstens einen Schrittmotor mit einer Wicklung (7), Schaltelemente (12 bis 15) zum Antrieb des Schrittmotors, einen den Schaltelementen elektronisch parallelen PN-Übergang (16 bis 19), eine aufladbare Sekundärbatterie (8) mit einem positiven und einem negativen Anschluß, Spannungsdetektormittel (10) zur Detektierung der Spannung der Sekundärbatterie und Ladesteuermittel (9) zur Steuerung des Aufladens der Sekundärbatterie, wobei die Ladesteuermittel an die Spannungsdetektormittel angeschlossen sind und wobei die Schaltelemente ein erstes von den entsprechenden Anschlüssen der Wicklung (7) an den positiven Anschluß der Batterie (8) angeschlossenes Schaltelementepaar (12, 13) und ein zweites von den entsprechenden Anschlüssen der Wicklung an den negativen Anschluß der Batterie (8) angeschlossenes Schaltelementepaar (14, 15) umfassen, worin die Ladesteuerschaltung durch Spannungsdetektormittel detektieren kann, daß die Spannung der Sekundärbatterie einen vorgegebenen Wert erreicht hat, und danach das erste Schaltelementepaar oder das zweite Schaltelementepaar mit Ausnahme während der Zeit der Erzeugung von Impulsen für den Antrieb des Schrittmotors in den EIN-Zustand schalten kann.

2. Analoge elektronische Uhr nach Anspruch 1, in der die Wicklung (7) zur Induzierung einer Wechselspannung in ihr durch ein externes Wechselmagnetfeld zwecks Aufladung der Sekundärbatterie nach Gleichrichtung durch den PN-Übergang ausgebildet ist.

3. Analoge elektronische Uhr nach Anspruch 2, in der entsprechende Anschlüsse der Wicklung nach Beendigung jeder Abgabe von Antriebsimpulsen für den Motor kurzgeschlossen und danach wenigstens drei der entsprechenden Schaltelemente in den AUS-Zustand geschaltet werden.

## Revendications

1. Pièce d'horlogerie analogique électronique comprenant au moins un moteur pas à pas ayant une bobine (7), des éléments de commutation (12 à 15) pour commander le moteur pas à pas, une jonction PN (16 à 19) électroniquement parallèle auxdits éléments de commutation, une batterie secondaire (8) qui peut être chargée et qui a une borne positive et une borne négative, des moyens de détection de tension (10) pour détecter la tension de la batterie secondaire, et des moyens de contrôle de charge (9) pour contrôler la charge de la batterie secondaire, les moyens de contrôle de charge étant connectés aux moyens de détection de tension, et les éléments de commutation comprenant une première paire d'éléments de commutation (12, 13) connectés à partir des bornes respectives de la bobine (7) à la borne positive de la batterie (8) et une seconde paire d'éléments de commutation (14, 15) connectés à partir des bornes respectives de la bobine à la borne négative de la batterie (8), dans laquelle ledit circuit de contrôle de charge est capable de détecter, par lesdits moyens de détection de tension, que la tension de ladite batterie secondaire a atteint une valeur prédéterminée et de commuter ensuite à l'état PASSANT ladite première paire d'éléments de commutation ou ladite seconde paire d'éléments de commutation, excepté pendant le temps de génération d'impulsions pour commander ledit moteur pas à pas.

2. Pièce d'horlogerie analogique électronique selon la revendication 1, dans laquelle la bobine (7) est agencée pour avoir une tension alternative induite à l'intérieur par un champ magnétique alternatif extérieur pour charger la batterie secondaire, ladite tension étant redressée par ladite jonction PN.

3. Pièce d'horlogerie analogique électronique selon la revendication 2, dans laquelle les bornes respectives de la bobine sont court-circuitées après l'achèvement de chaque sortie d'impulsions de commande du moteur et, après cela, au moins trois des éléments de commutation respectifs sont commutés à l'état BLOQUE.
